(19) **Europäisches Patentamt / European Patent Office / Office européen des brevets**

(11) **EP 4 772 956 A1**

(12) # DEMANDE DE BREVET EUROPEEN

(43) Date de publication:
**08.07.2026 Bulletin 2026/28**

(21) Numéro de dépôt: **25227445.1**

(22) Date de dépôt: **29.12.2025**

(51) Classification Internationale des Brevets (IPC):
**G05F 1/573** $^{(2006.01)}$

(52) Classification Coopérative des Brevets (CPC):
**G05F 1/5735; H02H 9/025**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **06.01.2025 FR 2500076**

(71) Demandeur: **STMicroelectronics International N.V.**
**1228 Plan-les-Ouates, Geneva (CH)**

(72) Inventeur: **GRANGE, Karl**
**37100 TOURS (FR)**

(74) Mandataire: **Cabinet Beaumont**
**4, Place Robert Schuman**
**B.P. 1529**
**38025 Grenoble Cedex 1 (FR)**

(54) **DISPOSITIF ET PROCEDE DE LIMITATION DE COURANT**

(57) Dispositif (100) de limitation d'un courant, comportant :
- un amplificateur différentiel (110) configuré pour égaliser des tensions aux bornes d'un transistor de puissance (106) et d'un transistor de mesure (108) ;
- un circuit de régulation (112) d'un courant de sortie du dispositif de limitation de courant, comprenant un amplificateur de transconductance (114) configuré pour limiter le courant de sortie lorsqu'un potentiel électrique de sortie de l'amplificateur différentiel est supérieur ou égal à un potentiel électrique de référence proportionnel à un courant de référence dont la valeur est égale à $I_{LIMIT}/(N.M)$, avec $I_{LIMIT}$ correspondant à une valeur limite de courant, N correspondant à un rapport de dimensions entre le transistor de puissance et le transistor de mesure, et M correspondant à un rapport de dimensions entre des transistors (116, 118) d'un miroir de courant couplé au transistor de mesure.

EP 4 772 956 A1

Fig. 2

## Description

Domaine technique

La présente description concerne de façon générale le domaine de la limitation de courant. La présente description concerne également le domaine de la protection d'interface de circuit.

Technique antérieure

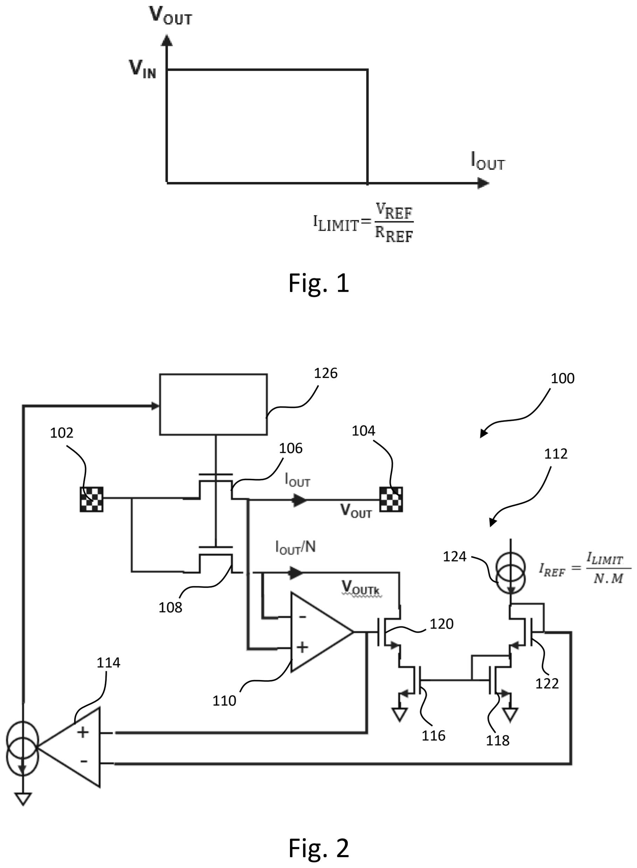

Un dispositif de limitation de courant, ou limiteur de courant, est un élément présent généralement dans les circuits de protection d'interface. La caractéristique, ou fonction, de transfert idéale d'un dispositif de limitation de courant, donnant la valeur de la la tension de sortie $V_{OUT}$ du dispositif en fonction de la valeur du courant de sortie $I_{OUT}$ du dispositif, est représentée sur la figure 1. Selon cette caractéristique, un tel dispositif est configuré pour recevoir en entrée une tension $V_{IN}$ et délivrer en sortie une tension $V_{OUT}$ égale à $V_{IN}$ tant que la valeur du courant de sortie $I_{OUT}$ ne dépasse pas une valeur limite $I_{LIMIT} = V_{REF}/R_{REF}$, avec $V_{REF}$ et $R_{REF}$ correspondant respectivement à une tension de référence et une charge résistive de référence. Au-delà de cette valeur limite de courant, le dispositif délivre en sortie une tension de valeur nulle.

Dans un dispositif de limitation de courant, un élément de détection est utilisé pour détecter la valeur du courant de sortie $I_{OUT}$, cet élément de détection pouvant correspondre à une résistance électrique externe. Lorsque des contraintes d'espace ou de coût se posent, l'utilisation d'une résistance électrique externe n'est pas adaptée. Un transistor MOSFET (transistor à effet de champ à grille isolée, ou « Metal-Oxide-Semiconductor Field-Effect-Transistor » en anglais) configuré en tant que SenseFET (transistor de détection à effet de champ, ou « Sense Field-Effect Transistor » en anglais) est alors possible. Pour rappel, un SenseFET correspond à un MOSFET de faibles dimensions appairé avec un MOSFET de puissance et configuré pour délivrer un faible courant de valeur proportionnelle à celle du courant de puissance délivré par le MOSFET de puissance.

L'utilisation d'un tel SenseFET est avantageuse car elle ne requiert pas la présence d'un élément externe au dispositif de limitation de courant, n'ajoute pas d'élément de dissipation dans le chemin de puissance et possède une meilleure précision de mesure qu'une résistance intégrée.

Toutefois, des problèmes se posent dans les dispositifs de limitation de courant existants faisant appel à des SenseFETs : instabilités, faible bande passante, dépassement de la valeur limite $I_{LIMIT}$, consommation d'énergie trop importante, complexité des dispositifs, etc.

Résumé de l'invention

Il existe un besoin de proposer un dispositif de limitation de courant ne présentant pas au moins une partie des inconvénients des solutions de limitation de courant existantes.

Un mode de réalisation pallie tout ou partie des inconvénients des solutions connues et propose un dispositif de limitation d'un courant, comportant au moins :

-   un amplificateur différentiel configuré pour égaliser des tensions aux bornes d'un transistor de puissance et d'un transistor de mesure, et dont des entrées sont couplées à une première électrode de conduction du transistor de puissance et à une première électrode de conduction du transistor de mesure ;
-   un circuit de régulation d'un courant de sortie du dispositif de limitation de courant, comprenant au moins un amplificateur de transconductance configuré pour limiter le courant de sortie lorsqu'un potentiel électrique de sortie de l'amplificateur différentiel est supérieur ou égal à un potentiel électrique de référence proportionnel à un courant de référence dont la valeur est égale à $I_{LIMIT}/ (N.M)$, avec $I_{LIMIT}$ correspondant à une valeur limite de courant, N correspondant à un rapport de dimensions entre le transistor de puissance et le transistor de mesure, et M correspondant à un rapport de dimensions entre des transistors d'un miroir de courant couplé au transistor de mesure.

Selon un mode de réalisation particulier, le transistor de puissance est un MOSFET de puissance, et le transistor de mesure est un SenseFET.

Selon un mode de réalisation particulier, le dispositif comprend en outre une entrée couplée à une deuxième électrode de conduction du transistor de puissance et à une deuxième électrode de conduction du transistor de mesure et sur laquelle un courant d'entrée est destiné à être appliqué, et une sortie couplée à la première électrode de conduction du transistor de puissance et sur laquelle le courant de sortie est destiné à être délivré.

Selon un mode de réalisation particulier, le transistor de puissance est couplé à une entrée non inverseuse de l'amplificateur différentiel, et le transistor de mesure est couplé à une entrée inverseuse de l'amplificateur différentiel.

Selon un mode de réalisation particulier, le circuit de régulation comporte en outre un transistor de contre-réaction dont une grille est couplée à une sortie de l'amplificateur différentiel, dont une première électrode de conduction est couplée au transistor de mesure et à l'une des entrées de l'amplificateur différentiel, et dont une deuxième électrode de conduction est couplée à un premier des transistors du miroir de courant.

Selon un mode de réalisation particulier, les dimensions du transistor de contre-réaction sont identiques à celles du premier des transistors du miroir de courant.

Selon un mode de réalisation particulier, le circuit de régulation comporte en outre un transistor d'équilibrage du miroir de courant, dont une grille est couplée en entrée de l'amplificateur de transconductance, dont une première électrode de conduction est couplée à une source de courant configurée pour délivrer le courant de référence, et dont une deuxième électrode de conduction est couplée à un deuxième des transistors du miroir de courant.

Selon un mode de réalisation particulier, les dimensions du transistor d'équilibrage du miroir de courant sont identiques à celles du deuxième des transistors du miroir de courant.

Selon un mode de réalisation particulier, une entrée non inverseuse de l'amplificateur de transconductance est couplée à une sortie de l'amplificateur différentiel, et une entrée inverseuse de l'amplificateur de transconductance est couplée à la grille du transistor d'équilibrage du miroir de courant.

Selon un mode de réalisation particulier, le circuit de régulation comprend en outre un circuit de commande du transistor de puissance et du transistor de mesure comprenant au moins une sortie couplée aux grilles des transistors de puissance et de mesure, et au moins une entrée couplée à une sortie de l'amplificateur de transconductance.

Selon un mode de réalisation particulier, lorsque la valeur du courant de sortie est inférieure à $I_{LIMIT}$, la valeur du potentiel électrique de sortie de l'amplificateur différentiel est inférieure à celle du potentiel électrique de référence et l'amplificateur de transconductance est configuré pour délivrer dans ce cas un courant de sortie de valeur nulle.

Il est également proposé un procédé de limitation de courant, comprenant au moins :

- amplification d'une différence entre un courant de sortie délivré par un transistor de puissance et un courant de mesure délivré par un transistor de mesure ;
- amplification et conversion en courant d'une différence entre un premier potentiel électrique, de valeur proportionnelle à la différence entre le courant de sortie et le courant de mesure, et un potentiel électrique de référence proportionnel à un courant de référence dont la valeur est égale à $I_{LIMIT}/(N.M)$, avec $I_{LIMIT}$ correspondant à une valeur limite de courant, N correspondant à un rapport de dimensions entre le transistor de puissance et le transistor de mesure, et M correspondant à un rapport de dimensions entre des transistors d'un miroir de courant couplé au transistor de mesure ;
- limitation de la valeur du courant de sortie lorsque la valeur du premier potentiel électrique est supérieure ou égale à celle du potentiel électrique de référence.

Selon un mode de réalisation particulier, lorsque la valeur du courant de sortie est inférieure à $I_{LIMIT}$, la valeur du premier potentiel électrique est alors inférieure à celle du potentiel électrique de référence et la valeur du courant de sortie est égale à celle d'un courant d'entrée.

Il est également proposé un dispositif de protection d'interface de circuit intégré, comprenant au moins un dispositif de limitation de courant selon un mode de réalisation particulier.

Il est également proposé un procédé de protection d'interface de circuit intégré, comprenant au moins la mise en œuvre d'un procédé de limitation de courant selon un mode de réalisation particulier.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

- la figure 1 représente une caractéristique de transfert idéale d'un dispositif de limitation de courant ;

- la figure 2 représente schématiquement un exemple de réalisation d'un dispositif de limitation de courant selon un mode de réalisation particulier ;

- la figure 3 représente une caractéristique de transfert d'un dispositif de limitation de courant selon un mode de réalisation particulier ;

- la figure 4, la figure 5 et la figure 6 représentent schématiquement différents modes de fonctionnement du dispositif de limitation de courant de la figure 2 ;

- la figure 7 représente schématiquement un circuit doté d'un dispositif de protection d'interface selon un mode de réalisation particulier.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques. Sur les figures, afin de faciliter leur lecture, les différents éléments et les différentes couches de matériaux ne sont pas représentés à la même échelle les uns par rapport aux autres.

Par souci de clarté, seuls les étapes et éléments utiles à la compréhension des modes de réalisation décrits ont été représentés et sont détaillés. En particulier, différents éléments (amplificateur différentiel, amplificateur de transconductance, circuit de commande de commutation) ne sont pas détaillés. L'homme du métier sera capable de réaliser de manière détaillée ces éléments à partir de la description donnée ici.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés (en anglais "coupled") entre eux, cela signifie que ces deux éléments peuvent être connectés ou être reliés par l'intermédiaire d'un ou plusieurs autres éléments. En outre, les termes « couplé », « relié » et « connecté » sont utilisés ici pour désigner des couplages, ou des liaisons, ou des connexions, électriques.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures. Toutefois, ces termes ne présument pas de la position et de l'orientation réelles du dispositif lors de son utilisation.

Sauf précision contraire, les expressions "environ", "approximativement", "sensiblement", et "de l'ordre de" signifient à 10 % près, de préférence à 5 % près.

De même, sans indication contraire, les gammes de valeurs indiquées incluent les bornes de ces gammes.

Dans tous les modes de réalisation décrits, pour chaque transistor à effet de champ, les première et deuxième électrodes de conduction correspondent à deux électrodes différentes l'une de l'autre d'un même transistor, l'une d'elles correspondant à l'électrode de source et l'autre correspondant à l'électrode de drain.

Un exemple de réalisation d'un dispositif 100 de limitation de courant est décrit ci-dessous en lien avec la figure 2.

Sur l'exemple de la figure 2, le dispositif 100 comporte une entrée 102 sur laquelle un signal d'entrée (tension $V_{IN}$ et courant $I_{IN}$) est destiné à être appliqué, et une sortie 104 sur laquelle un signal de sortie (tension $V_{OUT}$ et courant $I_{OUT}$) est destiné à être délivré. Le dispositif 100 est destiné à délivrer sur la sortie 104 la tension de sortie $V_{OUT}$ de valeur égale à la tension d'entrée $V_{IN}$ tant que la valeur du courant de sortie $I_{OUT}$ est inférieure à une valeur limite $I_{LIMIT}$.

Le dispositif 100 comporte un transistor de puissance 106 et un transistor de mesure 108. Dans l'exemple de réalisation décrit, le transistor de puissance 106 est un MOSFET de puissance, et le transistor de mesure 108 est un SenseFET. Dans l'exemple de réalisation décrit, le MOSFET de puissance et le SenseFET sont de type N. En variante, le MOSFET de puissance et/ou le SenseFET peut être de type P.

Le transistor de puissance 106 et le transistor de mesure 108 sont appairés l'un à l'autre (« closely matched » en anglais), c'est-à-dire que le transistor de puissance 106 correspond ici à N transistors 108 couplés en parallèle, avec N nombre entier supérieur à 1.

Le dispositif 100 comporte en outre un amplificateur différentiel 110 configuré notamment pour égaliser des tensions aux bornes du transistor de puissance 106 et du transistor de mesure 108. Des entrées de l'amplificateur différentiel 110 sont couplées à une première électrode de conduction du transistor de puissance 106 et à une première électrode de conduction du transistor de mesure 108. Dans l'exemple de réalisation décrit, le transistor de puissance 106 et le transistor de mesure 108 sont de type N, et les premières électrodes de conduction correspondent aux sources de ces transistors. Plus particulièrement, sur l'exemple de la figure 2, le transistor de puissance 106 est couplé à une entrée non inverseuse de l'amplificateur différentiel 110, et le transistor de mesure 108 est couplé à une entrée inverseuse de l'amplificateur différentiel 110.

En outre, dans l'exemple de réalisation décrit, l'entrée 102 est couplée à une deuxième électrode de conduction du transistor de puissance 106 et à une deuxième électrode de conduction du transistor de mesure 108. Dans l'exemple de réalisation décrit, ces deuxièmes électrodes de conduction correspondent aux drains de ces transistors. La sortie 104 est couplée à la première électrode de conduction du transistor de puissance 106.

Le dispositif 100 comporte en outre un circuit 112 de régulation du courant de sortie $I_{OUT}$. Ce circuit de régulation 112 comprend au moins un amplificateur de transconductance 114 configuré pour limiter le courant de sortie $I_{OUT}$ lorsqu'un potentiel électrique de sortie de l'amplificateur différentiel 110 est supérieur ou égal à un potentiel électrique de référence qui est proportionnel à un courant de référence $I_{REF}$ dont la valeur est égale à $I_{LIMIT}/(N.M)$, avec $I_{LIMIT}$ correspondant à une valeur limite de courant que le courant de sortie $I_{OUT}$ ne doit pas dépasser, N correspondant à un rapport de dimensions entre le transistor de puissance 106 et le transistor de mesure 108 (ou bien au nombre de transistors de mesure 108 couplés en parallèle pour former le transistor de puissance 106), et M correspondant à un rapport de dimensions entre des premier et deuxième transistors 116, 118 d'un miroir de courant couplé au transistor de mesure 108. Le paramètre M correspond également au nombre de deuxièmes transistors 118 couplés en parallèle pour former le premier transistor 116. Dans l'exemple décrit, les premier et deuxième transistors 116, 118 du miroir de courant sont des MOSFETs. A titre d'exemple, la valeur de N peut être comprise entre 100 et 1000, et la valeur de M peut être comprise entre 1 et 10.

Dans l'exemple de réalisation décrit, le circuit de régulation 112 comporte en outre un transistor de contre-réaction 120, correspondant à un MOSFET dans cet exemple, dont une grille est couplée à une sortie de l'amplificateur différentiel 110. Une première électrode de conduction du transistor de contre-réaction 120 est couplée au transistor de mesure 108 (et plus particulièrement à la première électrode de conduction du transistor de mesure 108 dans l'exemple décrit) et à l'une des entrées de l'amplificateur différentiel 110 (correspondant à l'entrée inverseuse de l'amplificateur différentiel 110). Une deuxième électrode de conduction du transistor de contre-réaction 120 est couplée au premier transistor 116 du miroir de courant (à une première électrode de conduction du premier transistor 116 sur l'exemple de la figure 2). Une deuxième électrode de conduction du premier transistor 116 est couplée à un potentiel électrique de référence, par exemple la masse du dispositif 100. Dans l'exemple de réalisation décrit, les dimensions du transistor de contre-réaction 120 sont identiques à celles du premier transistor 116 du miroir de courant.

Dans l'exemple de réalisation décrit, le circuit de régulation 112 comporte en outre un transistor 122, appelé transistor d'équilibrage du miroir de courant, permettant de réaliser la condition d'équilibre du miroir de courant formé par les premier et deuxième transistors 116, 118. Le transistor 122 correspond à un MOSFET dans cet exemple, dont une grille est couplée en entrée de l'amplificateur de transconductance 114 (à l'entrée inverseuse de l'amplificateur de transconductance 114 sur l'exemple de la figure 2). Une première électrode de conduction du transistor 122 est couplée à une source de courant 124 configurée pour délivrer le courant de référence $I_{REF}$. Une deuxième électrode de conduction du transistor 122 est couplée au deuxième transistor 118 du miroir de courant (plus précisément à une première électrode de conduction du deuxième transistor 118 sur l'exemple de la figure 2). Une deuxième électrode de conduction du deuxième transistor 118 est couplée au potentiel électrique de référence. Dans l'exemple de réalisation décrit, les dimensions du transistor 122 sont identiques à celles du deuxième transistor 118 du miroir de courant.

Dans l'exemple de réalisation décrit, une entrée non inverseuse de l'amplificateur de transconductance 114 est couplée à une sortie de l'amplificateur différentiel 110.

Sur l'exemple de la figure 2, le circuit de régulation 112 comprend en outre un circuit de commande 126 du transistor de puissance 106 et du transistor de mesure 108 comprenant au moins une sortie couplée aux grilles des transistors de puissance 106 et de mesure 108, et au moins au moins une entrée couplée à une sortie de l'amplificateur de transconductance 114. Par exemple, le circuit de commande 126 peut comporter un circuit de pompe de charge. Le circuit de commande 126 est configuré pour commander l'état de conduction du transistor de puissance 106 et du transistor de mesure 108.

Les transistors de puissance 106 et de mesure 108 sont appairés l'un à l'autre. Lors du fonctionnement du dispositif 100, le courant de sortie $I_{OUT}$ et la tension de sortie $V_{OUT}$ sont délivrés par le transistor de puissance 106 sur la sortie 104. Un courant de mesure délivré par le transistor de mesure 108 est égal à $I_{OUT}/N$, avec N correspondant au rapport de dimensions entre la transistor de puissance 106 et le transistor de mesure 108, c'est-à-dire au nombre de transistors de mesure 108 couplés en parallèle pour former le transistor de puissance 106. Pour cela, les tensions aux bornes de ces transistors 106, 108 sont maintenues égales l'une de l'autre, c'est-à-dire avec $V_{OUT} = V_{OUTk}$, par l'amplificateur différentiel 110, $V_{OUTk}$ correspondant à la tension aux bornes du transistor de mesure 108

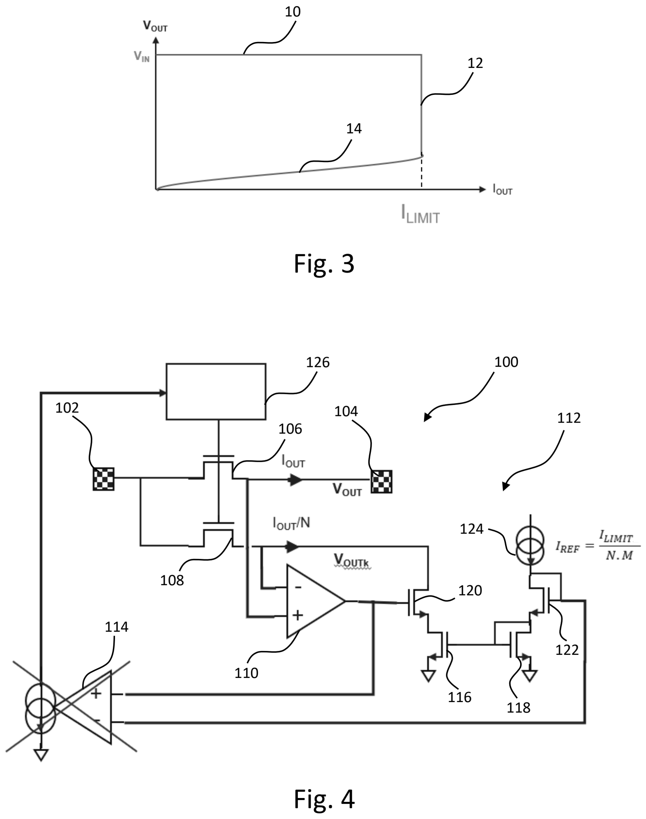

La caractéristique de transfert du dispositif 100 est représentée sur la figure 3.

Dans le dispositif 100, lorsque la valeur du courant de sortie $I_{OUT}$ est inférieure à la valeur limite $I_{LIMIT}$, la valeur du courant circulant à travers le transistor de contre-réaction 120 et le premier transistor 116 du miroir de courant est inférieur à celui circulant à travers le transistor 122 et le deuxième transistor 118 du miroir de courant. La valeur du potentiel électrique de sortie de l'amplificateur différentiel 110 est donc inférieure à celle du potentiel électrique de référence $V_{REF}$ obtenu sur la grille du transistor 122. Cela a pour conséquence que le courant obtenu en sortie de l'amplificateur de transconductance 114 est nul.

Dans cette configuration, il n'y a pas de limitation du courant délivré en sortie du dispositif 100. Le courant délivré par le transistor de puissance 106 n'est pas limité et est transmis intégralement sur la sortie 104. Un tel fonctionnement du dispositif 100 est similaire à celui d'une porte de transmission, ou « pass gate » en anglais, qui serait couplée entre l'entrée 102 et la sortie 104. Cela correspond à la partie désignée par la référence 10 de la caractéristique représentée sur la figure 3, sur laquelle la tension d'entrée $V_{IN}$ souhaitée se retrouve bien en sortie, et avec le courant $I_{OUT} < I_{LIMIT}$. En outre, la figure 4 représente symboliquement le dispositif 100 dans un tel mode de fonctionnement, appelé par exemple mode « pass-gate », dans lequel l'amplificateur de transconductance 114 n'intervient pas dans la régulation du courant de sortie du dispositif 100.

Lorsque la valeur du courant de sortie $I_{OUT}$ devient égale à la valeur limite $I_{LIMIT}$, la valeur du potentiel électrique de sortie de l'amplificateur différentiel 110 est alors égale à celle du potentiel électrique de référence $V_{REF}$. L'amplificateur de transconductance 114 délivre alors en sortie un courant non nul qui se traduit, par l'intermédiaire du circuit de commande 126, par une baisse de la tension de commande appliquée sur les grilles du transistor de puissance 106 et du transistor de mesure 108. Parallèlement à cela, le premier transistor 116 du miroir de courant est en état de saturation, ce qui coupe la boucle de régulation formée à travers le transistor de contre-réaction 120 et le premier transistor 116 du miroir de courant. Ces deux transistors 116, 120 sont alors équivalents à une source de courant délivrant un courant de valeur égale à $I_{LIMIT}/N$.

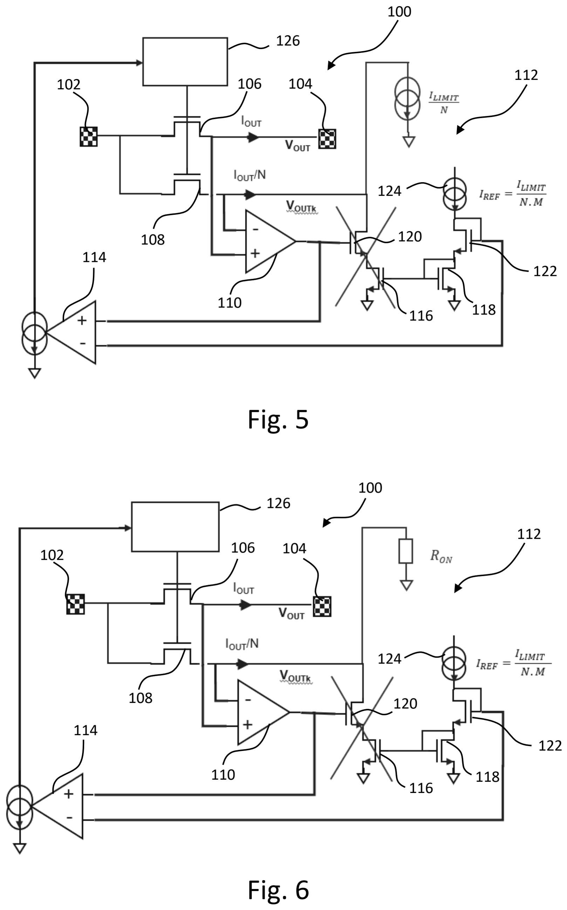

Dans cette configuration, la régulation du courant délivré en sortie du dispositif 100 est donc réalisée par l'amplificateur différentiel 110 et l'amplificateur de transconductance 114 en série l'un avec l'autre. Cela correspond à la partie désignée par la référence 12 de la caractéristique représentée sur la figure 3, sur laquelle la valeur de la tension $V_{OUT}$ chute, et avec la valeur du courant $I_{OUT}$ égale à la valeur limite $I_{LIMIT}$. En outre, la figure 5 représente symboliquement le dispositif 100 dans un tel mode de fonctionnement, appelé mode « limitation », dans lequel le transistor de contre-réaction 120 et le premier transistor 116 du miroir de courant peuvent être vus comme étant remplacés par une source de courant délivrant un courant égal à $I_{LIMIT}/N$.

Lorsque la valeur du potentiel électrique de sortie de l'amplificateur différentiel 110 est égale ou supérieure à celle du potentiel électrique de référence $V_{REF}$, et que $V_{OUT} = V_{OUTk} < (V_{SAT120} + V_{SAT116})$, avec $V_{SAT120}$ correspondant à la tension de saturation du transistor de contre-réaction 120 et $V_{SAT116}$ correspondant à la tension de saturation du premier transistor 116 du miroir de courant, le transistor de contre-réaction 120 et le premier transistor 116 du miroir de courant ne sont donc plus dans un état saturé et fonctionnent dans leur région ohmique ou linéaire. Ces deux transistors 116, 120 sont donc équivalents à une résistance $R_{ON}$, comme représenté symboliquement sur la figure 6.

Dans cette configuration, appelée par exemple mode « repli » ou « fold-back » en anglais, la régulation du courant délivré en sortie du dispositif 100 est donc réalisée par l'amplificateur différentiel 110 et l'amplificateur de transconductance 114 en série l'un avec l'autre. Cela correspond à la partie désignée par la référence 14 de la caractéristique représentée sur la figure 3, sur laquelle la valeur de la tension de sortie $V_{OUT}$ continue de baisser, et la valeur du courant $I_{OUT}$ baisse à mesure que la tension $V_{OUT}$ baisse et se rapproche de 0.

Il est donc proposé un dispositif 100 de limitation de courant basé sur un SenseFET, dans lequel le courant consommé par le dispositif 100 est très faible et égal à $I_{REF} = I_{LIMIT}/(N.M)$.

Le dispositif 100 présente une bonne stabilité car la régulation du courant n'est réalisée qu'avec une seule boucle de rétroaction. En effet, le passage entre le mode « pass-gate » et le mode « limitation » est obtenu ici par la saturation du transistor de contre-réaction 120 et/ou du premier transistor 116. En outre, dans le dispositif 100, les modes « limitation » et « repli » sont assurés par les mêmes composants, et cela avec une consommation très réduite.

Le dispositif 100 a une très faible consommation électrique car le courant constant demandé pour le fonctionnement du dispositif 100 est le courant de référence $I_{REF}$ qui peut être proche de 0.

Le dispositif 100 a également pour avantage d'être simple à réaliser, requiert peu de composants et présente une faible dissipation statique, c'est-à-dire une faible puissance dissipée par le dispositif 100 lorsque $I_{OUT} = 0$, cette puissance pouvant être définie par l'équation :

$$P_{statique} = V_{102} \text{ x } I_{LIMIT}/(N.M),$$

avec $V_{102}$ correspondant au potentiel électrique sur l'entrée 102.

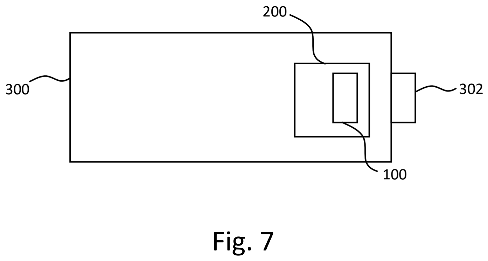

Le dispositif 100 de limitation de courant est par exemple utilisé dans un dispositif 200 de protection d'interface de circuit intégré, représenté symboliquement sur la figure 7. Sur cette figure, un circuit intégré 300 doté d'une interface 302, par exemple de type USB-C, comporte le dispositif 200 qui lui-même inclut le dispositif 100. Le circuit intégré 300 fait par exemple partie d'un dispositif électronique tel que par exemple une montre connectée ou tout autre dispositif électronique portatif connecté.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en œuvre pratique des modes de réalisation et variantes décrits est à la portée de la personne du métier à partir des indications fonctionnelles données ci-dessus.

**Revendications**

1. Dispositif (100) de limitation d'un courant, comportant au moins :

   - un amplificateur différentiel (110) configuré pour égaliser des tensions aux bornes d'un transistor de puissance (106) et d'un transistor de mesure (108), et dont des entrées sont couplées à une première électrode de conduction du transistor de puissance (106) et à une première électrode de conduction du transistor de mesure (108) ;
   - un circuit de régulation (112) d'un courant de sortie du dispositif (100) de limitation de courant, comprenant au moins un amplificateur de transconductance (114) configuré pour limiter le courant de sortie lorsqu'un potentiel électrique de sortie de l'amplificateur différentiel (110) est supérieur ou égal à un potentiel électrique de référence proportionnel à un courant de référence dont la valeur est égale à $I_{LIMIT}/(N.M)$, avec $I_{LIMIT}$ correspondant à une valeur limite de courant, N correspondant à un rapport de dimensions entre le transistor de puissance (106) et le transistor de mesure (108), et M correspondant à un rapport de dimensions entre des transistors (116, 118) d'un miroir de courant couplé au transistor de mesure (108).

2. Dispositif (100) selon la revendication 1, dans lequel le transistor de puissance (106) est un MOSFET de puissance, et dans lequel le transistor de mesure (108) est un SenseFET.

3. Dispositif (100) selon l'une quelconque des revendications précédentes, comprenant en outre une entrée (102) couplée à une deuxième électrode de conduction du transistor de puissance (106) et à une deuxième électrode de conduction du transistor de mesure (108) et sur laquelle un courant d'entrée est destiné à être appliqué, et une sortie (104) couplée à la première électrode de conduction du transistor de puissance (106) et sur laquelle le courant de sortie est destiné à être délivré.

4. Dispositif (100) selon l'une quelconque des revendications précédentes, dans lequel le transistor de puissance (106) est couplé à une entrée non inverseuse de l'amplificateur différentiel (110), et dans lequel le transistor de mesure (108) est couplé à une entrée inverseuse de l'amplificateur différentiel (110).

5. Dispositif (100) selon l'une quelconque des revendications précédentes, dans lequel le circuit de régulation (112) comporte en outre un transistor de contre-réaction (120) dont une grille est couplée à une sortie de l'amplificateur différentiel (110), dont une première électrode de conduction est couplée au transistor de mesure (108) et à l'une des entrées de l'amplificateur différentiel (110), et dont une deuxième électrode de conduction est couplée à un premier des transistors (116) du miroir de courant.

6. Dispositif (100) selon la revendication 5, dans lequel les dimensions du transistor de contre-réaction (120) sont identiques à celles du premier des transistors (116) du miroir de courant.

7. Dispositif (100) selon l'une quelconque des revendications précédentes, dans lequel le circuit de régulation (112) comporte en outre un transistor (122) d'équilibrage du miroir de courant, dont une grille est couplée en entrée de l'amplificateur de transconductance (114), dont une première électrode de conduction est couplée à une source de courant (124) configurée pour délivrer le courant de référence, et dont une deuxième électrode de conduction est couplée à un deuxième des transistors (118) du miroir de courant.

8. Dispositif (100) selon la revendication 7, dans lequel les dimensions du transistor (122) d'équilibrage du miroir de courant sont identiques à celles du deuxième des transistors (118) du miroir de courant.

9. Dispositif (100) selon l'une quelconque des revendications 7 ou 8, dans lequel une entrée non inverseuse de l'amplificateur de transconductance (114) est couplée à une sortie de l'amplificateur différentiel (110), et dans lequel une entrée inverseuse de l'amplificateur de transconductance (114) est couplée à la grille du transistor (122) d'équilibrage du miroir de courant.

10. Dispositif (100) selon l'une quelconque des revendications précédentes, dans lequel le circuit de régulation (112) comprend en outre un circuit de commande (126) du transistor de puissance (106) et du transistor de mesure (108) comprenant au moins une sortie couplée aux grilles des transistors de puissance (106) et de mesure (108), et au moins une entrée couplée à une sortie de l'amplificateur de transconductance (114).

11. Dispositif (100) selon l'une quelconque des revendications précédentes, dans lequel, lorsque la valeur du courant de sortie est inférieure à $I_{LIMIT}$, la valeur du potentiel électrique de sortie de l'amplificateur différentiel (110) est inférieure à celle du potentiel électrique de référence et l'amplificateur de transconductance (114) est configuré pour délivrer dans ce cas un courant de sortie de valeur nulle.

12. Procédé de limitation de courant, comprenant au moins :

    - amplification d'une différence entre un courant de sortie délivré par un transistor de puissance (106) et un courant de mesure délivré par un transistor de mesure (108);
    - amplification et conversion en courant d'une différence entre un premier potentiel électrique, de valeur proportionnelle à la différence entre le courant de sortie et le courant de mesure, et un potentiel électrique de référence proportionnel à un courant de référence dont la valeur est égale à $I_{LIMIT}/(N.M)$, avec $I_{LIMIT}$ correspondant à une valeur limite de courant, N correspondant à un rapport de dimensions entre le transistor de puissance (106) et le transistor de mesure (108), et M correspondant à un rapport de dimensions entre des transistors (116, 118) d'un miroir de courant couplé au transistor de mesure (108) ;
    - limitation de la valeur du courant de sortie lorsque la valeur du premier potentiel électrique est supérieure ou égale à celle du potentiel électrique de référence.

13. Procédé selon la revendication 12, dans lequel, lorsque la valeur du courant de sortie est inférieure à $I_{LIMIT}$, la valeur du premier potentiel électrique est alors inférieure à celle du potentiel électrique de référence et la valeur du courant de sortie est égale à celle d'un courant d'entrée.

**14.** Dispositif (200) de protection d'interface de circuit intégré (300), comprenant au moins un dispositif (100) de limitation de courant selon l'une quelconque des revendications 1 à 11.

**15.** Procédé de protection d'interface de circuit intégré (300), comprenant au moins la mise en œuvre d'un procédé de limitation de courant selon l'une quelconque des revendications 12 ou 13.

$$I_{LIMIT} = \frac{V_{REF}}{R_{REF}}$$

Fig. 1

Fig. 2

Fig. 3

Fig. 4

EP 4 772 956 A1

Fig. 5

Fig. 6

Fig. 7

**EP 4 772 956 A1**

Europäisches
Patentamt

European
Patent Office

Office européen
des brevets

# RAPPORT DE RECHERCHE EUROPEENNE

Numéro de la demande

EP 25 22 7445

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2023/251677 A1 (WU HSIN-TA [NO]) 10 août 2023 (2023-08-10) * alinéas [0060] - [0061]; figure 1 * ----- | 1-15 | INV. G05F1/573 |
| A | US 2012/038332 A1 (LIN YUNG-CHENG [TW]) 16 février 2012 (2012-02-16) * alinéas [0035] - [0037]; figures 6,7 * ----- | 1-15 | |
| A | US 2014/253070 A1 (SAKAGUCHI KAORU [JP]) 11 septembre 2014 (2014-09-11) * alinéas [0065] - [0067]; figure 7 * ----- | 1-15 | |

DOMAINES TECHNIQUES RECHERCHES (IPC)

G05F
H02H

Le présent rapport a été établi pour toutes les revendications

| Lieu de la recherche | Date d'achèvement de la recherche | Examinateur |
|---|---|---|
| La Haye | 26 mai 2026 | Bellatalla, Filippo |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.........................................................................................................
& : membre de la même famille, document correspondant

EPO FORM 1503 03.82 (P04C02)

**EP 4 772 956 A1**

## ANNEXE AU RAPPORT DE RECHERCHE EUROPEENNE
## RELATIF A LA DEMANDE DE BREVET EUROPEEN NO.

EP 25 22 7445

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-05-2026

| Document brevet cité<br>au rapport de recherche | Date de<br>publication | Membre(s) de la<br>famille de brevet(s) | Date de<br>publication |
|---|---|---|---|
| US 2023251677 A1 | 10-08-2023 | GB 2615533 A<br>US 2023251677 A1 | 16-08-2023<br>10-08-2023 |
| US 2012038332 A1 | 16-02-2012 | TW 201207591 A<br>US 2012038332 A1 | 16-02-2012<br>16-02-2012 |
| US 2014253070 A1 | 11-09-2014 | CN 104035473 A<br>JP 6205142 B2<br>JP 2014174737 A<br>KR 20140110792 A<br>TW 201504785 A<br>US 2014253070 A1 | 10-09-2014<br>27-09-2017<br>22-09-2014<br>17-09-2014<br>01-02-2015<br>11-09-2014 |

EPO FORM P0460

Pour tout renseignement concernant cette annexe : voir Journal Officiel de l'Office européen des brevets, No.12/82